# EUROPEAN PATENT SPECIFICATION

(11) **EP 3 126 675 B1**
(45) Date of publication and mention of the grant of the patent: **28.10.2020**
(21) Application number: 15720570.9
(22) Date of filing: 30.03.2015
(51) Int. Cl.: F04B 39/00, F04B 39/02

(54) **RADIAL BEARING ARRANGEMENT IN A REFRIGERATION COMPRESSOR**
RADIALLAGERANORDNUNG IN EINEM KÜHLKOMPRESSOR
AGENCEMENT DE PALIER RADIAL DANS UN COMPRESSEUR DE RÉFRIGÉRATION

(30) Priority: 01.04.2014 BR PI1478827
(43) Date of publication of application: 08.02.2017
(73) Proprietor: Embraco Indústria de Compressores e Soluções em Refrigeração Ltda., 89219-100 Joinville, SC (BR)
(72) Inventor: MANKE, Adilson Luiz, 89221-103 Joinville - SC (BR); PUFF, Rinaldo, 89220-160 Joinville - SC (BR); SACOMORI, Diego, 89223-140 Joinville - SC (BR)
(74) Representative: Soldatini, Andrea
(86) International application number: PCT/BR2015/050035
(87) International publication number: WO 2015/149146

(56) References cited:
- EP-A1- 0 910 744
- WO-A1-2007/123635
- WO-A1-2011/022799
- US-A- 2 280 296

## Description

### Field of the Invention

The present invention refers to a radial bearing arrangement between parts of a reciprocating refrigeration compressor, either hermetic or not, said compressor parts being relatively displaceable in relation to each other in a rotary or angular movement, in order to reduce the friction coefficient between said parts, so as to reduce the power consumed and the starting torque of the electric motor. The invention is particularly applied in the radial bearing of the crankshaft and of the larger and smaller eyes of the connecting rod of the compressor type considered herein.

The invention further allows that the radial bearing regions may optionally undergo a controlled deformation in order to minimize the localized or linear contact of cooperating parts caused by alignment errors during fabrication or assembly of said cooperating parts, or also by the forces acting on said parts resulting from the operation of the electric motor of the compressor or from the compression of the refrigerant gas.

### Prior Art

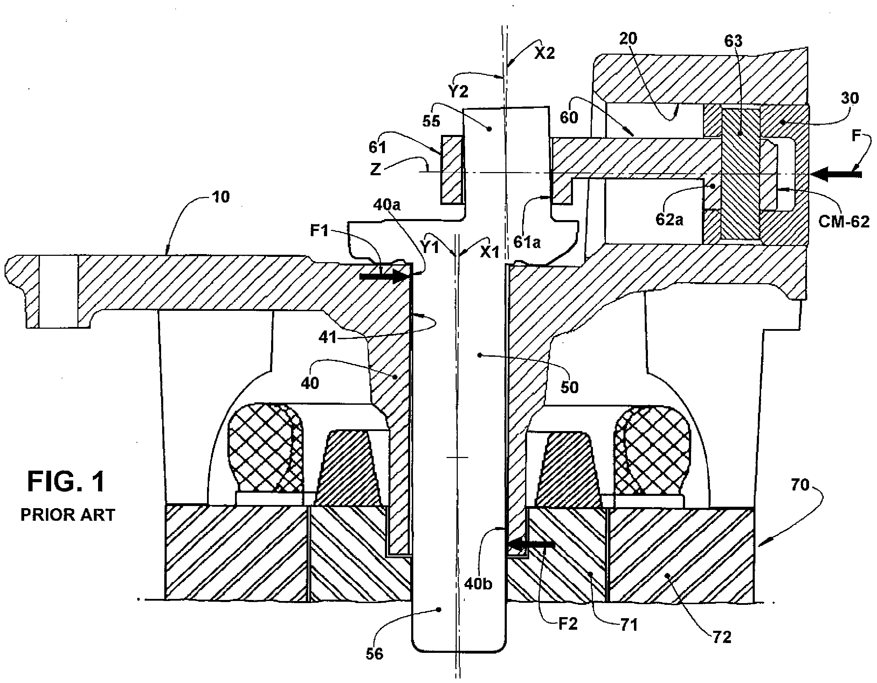

A conventional construction of a refrigeration compressor of the reciprocating type is illustrated in figure 1 of the attached drawings and comprises, in the interior of a shell (not illustrated), a crankcase 10 carrying a cylinder 20, inside which actuates a piston 30 in a reciprocating motion.

The crankcase 10 is further provided with a bearing hub 40 which defines, internally, a radial bearing 41 inside which is mounted a crankshaft 50 which incorporates an eccentric end portion 55 projecting outside from a first end portion 40a of the bearing hub 40 and being operatively coupled to the piston 30, by means of a connecting rod 60, and a free end portion 56 which projects outwardly from a second end portion 40b of the bearing hub 40. In the construction illustrated in figure 1, the crankcase 10 has the region thereof, which is adjacent to and surrounds the first end portion 40a of the bearing hub 40, defined by a flat annular region for seating an axial sliding bearing, not illustrated.

Around the eccentric end portion 55 of the crankshaft 50 is mounted a larger eye 61 of the connecting rod 60, whose smaller eye 62 may present an end portion 62a facing the bearing hub 40 and is coupled to the piston 30 by a piston pin 63. This end of the connecting rod may also be provided with a spherical (or semi-spherical) portion. The free end portion 56 of the crankshaft 50, which projects outwardly from the bearing hub 40, is coupled to a rotor 71 of an electric motor 70, having a stator 72 fixed to the crankcase 10. The electric motor 70 rotates, by means of its rotor 71, the crankshaft 50, impelling the piston 30 by means of the connecting rod 60, in a reciprocating motion.

The end of the cylinder 20 opposite to the connecting rod 60 is closed by a valve plate (not illustrated), provided with at least one suction valve and one discharge valve, according to any suitable construction, either known or unknown to the state of the art.

One problem related to these compressors is due to the fact that the stator 72 of the electric motor 70 presents concentricity deviations in relation to the radial bearing 41 of the bearing hub 40, which are caused by the mounting process and by the fact that the rotor 71 presents radial striking errors, which alone or in a combined manner, produce magnetic radial forces on the rotor 71 and on the crankshaft 50, producing localized contacts on the radial bearing 41, mainly on the second end portion 40b of the bearing hub 40, particularly in the first moments during starting operations.

The larger contact forces between the crankshaft 50 and the second end portion 40b of the bearing hub 40 demand a higher torque from the motor 70 in order to start moving, that is, greater power from the motor, increasing the minimum starting voltage in order to overcome the static and dynamic friction forces between the crankshaft 50 and the radial bearing 41.

Eventual overloads in the radial bearing of the crankshaft during operation of the compressor are also factors that potentiate the energy consumption and wear in the radial bearing 41, particularly when the overloads occur under poor lubrication situations.

The present compressor may further comprise, to a greater or smaller extent, positioning errors such as those which cause loss of orthogonality between the axis of the crankshaft 50 and the axis of the piston 30 of the mounted assembly .

The misalignments errors mentioned above are responsible for localized contacts between the piston 30 and the cylinder 20, between the piston pin 63 and the smaller eye 62 of the connecting rod 60, between the larger eye 61 of the connecting rod 60 and the eccentric portion 55 of the crankshaft 50, and also between the latter and the bearing regions of the radial bearing 41, which are machined in the bearing hub 40 of the crankcase 10.

The misalignments errors mentioned above further increase the contact forces and, consequently, the friction forces, particularly when under a poor lubrication regime, to be overcome by the electric motor, reducing the efficiency thereof and requiring increased design parameters of torque, besides also increasing the wear generation of the parts under friction. As an example, reference is made to document EP0910744.

Besides the problems mentioned above, during the compression of the gas in cylinder 20, the compression force F, acting against the top of the piston 30, is transmitted to the connecting rod 60 and to the eccentric portion 55 of the crankshaft 50, causing deformations in the mechanical assembly, which cause the misalignment of the eccentric portion 55 of the crankshaft 50 in relation to the axis of the larger eye 61 of the connecting rod 60 and of the crankshaft 50 in relation to the axis of the radial bearing 41, amplifying the localized contact problems mentioned above which result from positioning errors during fabrication and assembly of the component parts, enhancing the increase in energy consumption and generation of wear.

During the compression of the gas in cylinder 20, the compression force F acting against the top of the piston 30 is transmitted, by the connecting rod 60, to an end portion 61a of the larger eye 61, generating a reaction in the eccentric end portion 55 of the crankshaft 50, which is transmitted, by the crankshaft 50, to the radial bearing 41 of the bearing hub 40, in the first and in the second end portion 40a e 40b of the latter, producing in said end portions a first and a second reaction force F1, F2, both derived from the compression force F, the first reaction force F1 being more intense and harmful to the maintenance of the oil film between the crankshaft 50 and the radial bearing 41, in the first end portion 40a of the bearing hub 40 which is positioned closer to the axis in which the compression force F acts.

The forces mentioned above, when in presence of radial gaps between the crankshaft 50 and the radial bearing 41 which are inherent to sliding bearings, produce the so called misalignment of the crankshaft 50, which, when considering an ideal situation of high stiffness of the components of the mechanism, cause: the first end portion 40a and the second end portion 40b of the bearing hub 40 to be those parts in which the radial bearing 41 supports the loads and momenta applied to the bearing hub 40; and the increase of the contact forces between these components, leading to the same problems regarding the increase of energy consumption and wear mentioned above.

There are known constructions in which is provided a region which may be radially and elastically deformed, in the first end portion of the bearing hub, which region is obtained by a circumferential groove or cut provided in the bearing hub and in which interior is usually provided an axial roller bearing.

In this known construction, the first end portion of the bearing hub may incorporate a terminal portion which projects axially outwardly from the crankcase and which may present a certain complacency and may be radially and elastically deformed by the localized pressure exerted by the confronting region of the crankshaft, in the final phase of the compression stroke of the piston, in order to accommodate to the crankshaft surface, preventing a punctual contact and the interruption of the thick oil film between the crankshaft and the bearing hub in the first end portion of the latter.

Although said prior construction provides a complacent region in the bearing hub 40, it only addresses the issue of interrupting the oil film in the first end portion 40a do bearing hub 40, in which are applied, by the crankshaft 50, the largest forces derived from the compression of the refrigerant gas by the piston.

In the operational condition in which the complacent region (with controlled elastic deformation) of the first end portion 40a of the bearing hub 40 is elastically deformed by the pressure applied by the crankshaft 50, the latter and consequently its end portion 55 tend to occupy a position in which the axis thereof presents a certain inclination in relation to the axis of the bearing hub 40 and of the larger eye 61 of the connecting rod 60. This inclination of the crankshaft 50 and of the eccentric portion 55 thereof tends to cause the interruption of the oil film in the end portion 61a of the larger eye 61 of the connecting rod 60 facing the crankcase 10.

The complacency (elastic deformation) of the first end portion 40a of the bearing hub 40, according to the prior art construction, is not capable of eliminating the problem of increased wear in said end portion of the larger eye 61 of the connecting rod 60, as well as the transmission, by the latter, of loads onto the piston 30, forcing the latter radially against the cylinder 20. [0021] Another aspect not addressed by said prior art construction relates to the need for increasing the torque of the electric motor 70, and to the wear by localized contact in the second end portion 40b of the bearing hub 40, upon starts of the electric motor 70 with the rotor 71 presenting concentricity deviations in relation to stator 72, as already previously mentioned.

Said prior art construction only addresses the maintenance of the oil film in the radial bearings of a reciprocating refrigeration compressor, considering only the problem of poor lubrication and high wear in the first end portion 40a do bearing hub 40.

Due to the problems of localized wear, high energy consumption and increase in the starting voltage of the electric motors, it is desirable to provide a technical solution to be applied for bearing at least the crankshaft of a reciprocating refrigeration compressor, and which may eliminate or at least minimize the drawbacks caused by misalignments of the shaft, both during start and during operation of the compressor under overload conditions.

### Summary of the Invention

Due to the operational problems discussed above, the present invention, which is defined in claim 1, has the general objective to provide a bearing arrangement in a reciprocating refrigeration compressor of the type discussed above, which allows reducing the friction coefficient between the crankshaft and at least the second end portion of the bearing hub and also, if convenient, the friction coefficient between the crankshaft and the first end portion of the bearing hub, and the friction coefficient between the larger and smaller eyes of the connecting rod and the eccentric end portion of the crankshaft and the piston pin, respectively, and thus reducing the torque and starting voltage of the electric motor, by means of a technical solution which is feasible both constructively and economically.

A further objective of the invention is to provide a bearing arrangement, such as mentioned above, which prevents or at least reduces the wear by localized contact of the region of the radial bearing of the crankshaft, at least in relation to the second end portion of the bearing hub and also, if convenient, between the crankshaft and the first end portion of the bearing hub, and between the larger and smaller eyes of the connecting rod and the eccentric end portion of the crankshaft and the piston pin, respectively.

As already mentioned, the present arrangement is applied to a compressor of the type comprising: a crankcase carrying a cylinder and a bearing hub defining a radial bearing; a crankshaft mounted in the radial bearing and having an eccentric end portion and a free end portion which project outward from a first and from a second end portion, respectively, of the bearing hub; a piston housed in the cylinder; and a connecting rod coupling the eccentric end portion of the crankshaft to the piston.

According to a first aspect of the invention, at least the second end portion among the first and the second end portions of the bearing hub is defined by a respective bushing, made of a material having a low friction coefficient, which is totally fixed in the interior of the bearing hub.

According to an additional and optional aspect of the present invention, the larger and smaller eyes of the connecting rod affix, totally contained in the interior thereof, a respective bushing having a low friction coefficient defining the bearing surface of the larger eye in relation to the eccentric end portion of the crankshaft and of the smaller eye in relation to the piston pin.

The end portions of the bearing hub and optionally of the larger and smaller eyes present a resistant structure, with reduced and insufficient elastic deformation when pressed by the confronting component of the compressor supported on said end portions, which may further present a terminal portion elastically deformable jointly with a confronting terminal portion of the associated bushing.

The arrangement proposed by the present invention allows the use of bushings made of a material having a low friction coefficient and presenting a construction with a reliable production with reduced radial thickness, guaranteeing efficiency gains in terms of friction loss under different operational and mounting conditions of the compressor, the structural behavior of the bushings being controlled by the structural characteristics of the parts of the compressor that support said bushings, particularly in terminal portions (or end portions) of the latter, which are subject to pressure by the confronting component of the compressor being rotatively supported on said bushings.

### Brief Description of the Drawings

The invention will be described below with reference to the attached drawings, given by way of example, and in which:
Figure 1 represents a simplified vertical cross-sectional view of a refrigeration compressor of the type considered herein, with the radial bearings of the crankshaft being built according to the prior art and further illustrating, in an amplified manner, the crankshaft being angularly inclined in relation to the axis of the radial bearing defined in the bearing hub and to the axis of the larger eye of the connecting rod;
Figure 2 represents a view similar to that of figure 1, but illustrating the radial bearings of the crankshaft built according to a first embodiment of the invention, with the crankshaft inclined in relation to the axis of the bearing hub and of the larger eye of the connecting rod;
Figure 3 represents an enlarged detail of the part of figure 2 which illustrates the radial bearings of the crankshaft ;
Figure 4 represents a view similar to that of figure 2, but illustrating the radial bearings of the crankshaft built according to a second form of carrying out the invention, with the crankshaft being inclined in relation to the axis of the bearing hub and of the larger eye of the connecting rod;
Figure 5 represents an enlarged detail of the part of figure 4 that illustrates the radial bearings of the crankshaft ;
Figure 6 represents a simplified, partial and vertical cross-sectional view, in an enlarged scale, of the portion of the crankshaft that presses and deforms, elastically and radially outwards, the second end portion of the bearing hub, constructed according to the embodiment illustrated in figures 4 and 5;
Figure 7 represents a simplified front view of the region of the second end portion of the bearing hub illustrated in figure 6, said view being taken in the direction of arrow VII of the previous figure, with the shaft being illustrated in dashed lines; and
Figure 8 represents a schematic perspective view of the elastically deformed bearing region illustrated in figure 7.

### Detailed Description of the Invention

As already described and illustrated in the attached drawings, the radial bearing arrangement of the present invention is applied to a refrigeration compressor of the type comprising, in the interior of a shell (not illustrated), a crankcase 10 carrying, either in a single piece or not, a cylinder 20, having an axis Z, and a bearing hub 40 which internally defines a radial bearing 41 having an axis XI.

A crankshaft 50, having an axis Yl, is mounted in the interior of the radial bearing 41 of the bearing hub 40 and has an eccentric end portion 55 with an axis Y2 which projects outward from a first end portion 40a of the bearing hub 40, and a free end portion 56 which projects outward from a second end portion 40b of the bearing hub 40.

A piston 30 is housed in the cylinder 20 to be displaced therein in a reciprocating motion by a connecting rod 60 having an end defining a larger eye 61, which is mounted around the eccentric end portion 55 of the crankshaft 50, and an opposite end carrying a coupling means CM to allow coupling the connecting rod 60 to the piston 30. The coupling means CM may take the form of a smaller eye 62, of a spherical joint (not illustrated) or any other means able to carry out the connecting rod-piston coupling.

In the illustrated construction, the smaller eye 62 is coupled to the piston 30 by means of a piston pin 63, with the crankshaft 50 being rotary driven by an electric motor 70 which comprises a rotor 71 mounted to the free end portion 56 of the crankshaft 50, and a stator 72 fixed to the crankcase 10 around the rotor 71.

As mentioned above, the piston pin 63 and the smaller eye 62 of the connecting rod 60 may be replaced by a piston-connecting rod assembly with a spherical joint, or any other coupling arrangement, without departing from the constructive concept of the present invention.

The crankcase 10 and crankshaft 50 parts may be built in any suitable material well known in the art, such as, for example, aluminum or cast iron alloys for the crankcase 10 and steel or cast iron alloys for the crankshaft 50.

In an ideal assembly and operation condition of the compressor (not illustrated in the drawings), the axis Yl of the crankshaft 50 matches the axis XI of the radial bearing 41 of the bearing hub 40 and the axis X2 of the larger eye 61 of the connecting rod 60 matches the axis Y2 of the eccentric end portion 55 of the crankshaft 50. In this ideal condition, the axis XI of the radial bearing 41 is orthogonal to the axis Z of the cylinder 20.

As already mentioned in the introduction of the present disclosure, the compressors considered herein present the problem related to the misalignment of the portions of the crankshaft 50 in relation to the radial bearing 41 and to the larger eye 61, upon start of the electric motor 70 with its stator 72 presenting concentricity deviations in relation to the radial bearing 41 defined in the bearing hub 40. In these conditions, the greater the friction coefficient between the crankshaft 50 and the confronting end portion of the bearing hub 40, the greater will be the required starting voltage for a certain dimensioning of the electric motor 70 and the greater will be the wear of this region of radial bearing of the crankshaft 50.

Since the minimum starting voltage of a compressor motor is usually specified by domestic and/or international standards, it is necessary that the dimensioning of the motor torque is suitable to meet these standards. For a certain motor dimensioning, the greater the friction coefficient of the bearings, the greater the starting torque and, consequently, the greater will be the minimum starting voltage of this compressor motor.

In the conventional constructions of the radial bearing parts, as illustrated in figure 1, the misalignment of the crankshaft 50 and of its eccentric end portion 55 in the interior of the radial bearing 41, and of the larger eye 61 of the connecting rod 60, respectively, makes the crankshaft 50 to have portions of its surface supported only on end regions of reduced axial and circumferential dimensions of the first and second end portions 40a, 40b of the bearing hub 40, and of the end portions 61a, 62a of the larger eye 61 and of the smaller eye 62 of the connecting rod 60, since these regions of mutual contact or presenting a practically punctual bearing, under misalignment of the crankshaft, do not accommodate themselves to the angular misalignment of the shaft in relation to the portion of the radial bearing that supports said shaft, producing high localized wear in these regions of the bearing hub.

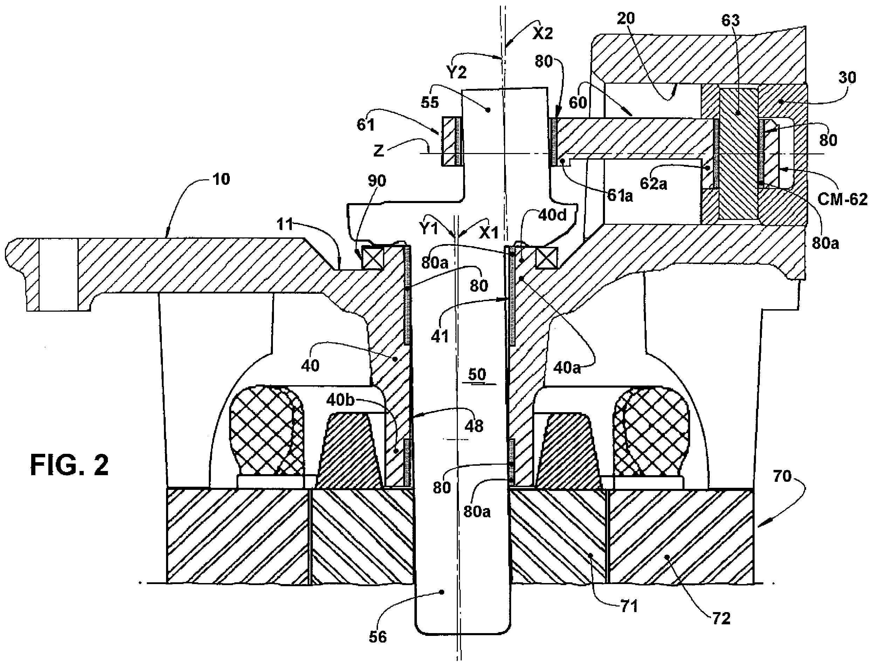

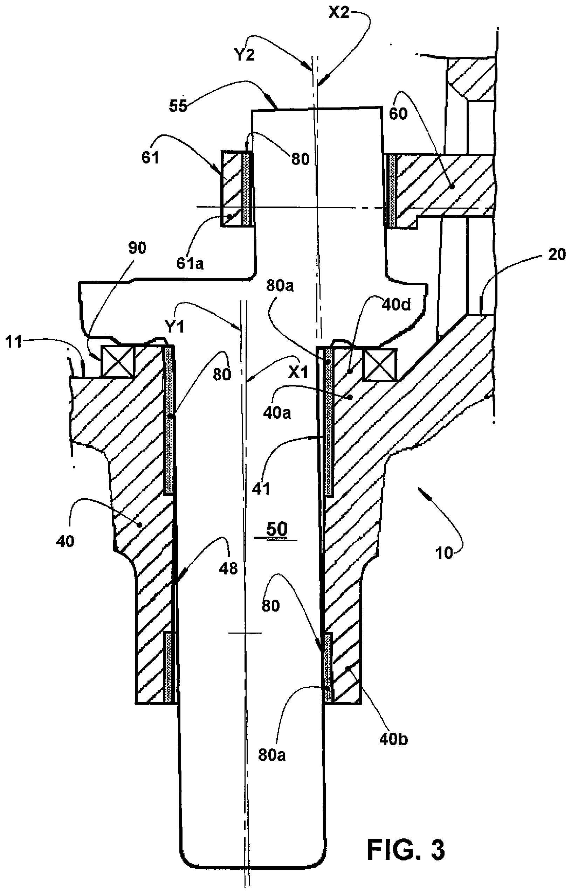

Even in the cases of using an axial roller bearing, in which the first end portion 40a of the bearing hub 40 is provided with a circumferential cut defining a terminal portion 40d (figures 2 and 3) which projects axially outwardly from the crankcase 10, and which is elastically and radially deformable, it is only addressed the aspect of oil film interruption in the first end portion 40a of the bearing hub 40, in which are applied, by the crankshaft 50, the greatest forces derived from the compression of the refrigerant gas by the piston.

However, the provision of a complacency region in the first end portion 40a of the bearing hub 40 does not deal with the issue of torque increase of the electric motor 70 and localized contact wear in the second end portion 40b of the bearing hub 40, upon the starts of the electric motor 70 with the rotor 71 presenting concentricity deviations in relation to the stator 72.

The localized wear produced by the operational condition of "inclination" of the crankshaft 50 is high and is further responsible for efficiency loss due to the rupture of the oil film in said bearing regions of reduced area, frequently demanding the use of high viscosity oil or higher load bearings, which tends to increase losses by viscous friction.

Aiming at minimizing or even eliminating the problems related to the starting voltage and localized wear, the present invention proposes the provision of a radial bearing arrangement, according to which the second end portion 40b of the bearing hub 40 is defined by a respective bushing 80 of a material of low friction coefficient and totally fixed in the interior of the bearing hub 40.

The present arrangement is further defined by the provision of one more bushing 80, constructed in a material with low friction coefficient, totally affixed in the interior of the bearing hub 40, in order to define a first end portion 40a of the latter.

The provision of a bushing 80 defining each of the first and second end portions 40a, 40b of the bearing hub 40 allows increasing even more the efficiency of the radial bearing of the crankshaft 50, reducing the resistant torques and the friction losses in different operational and assembly conditions of the compressor.

Further according to the invention, the larger eye 61 and also the smaller eye 62 of the connecting rod 60 may affix, totally contained in the interior thereof, a respective bushing 80, also having a low friction coefficient and a construction similar to that of the bearing bushings of the crankshaft 50, and defining the bearing surface of the larger eye 61 in relation to the eccentric end portion 55 of the crankshaft 50 and of the smaller eye 62 in relation to the piston pin 63.

The bushing 80 of the type considered in the present invention may be formed, for example, by the combination of layers of metal and polymer, not illustrated, with the polymer layer being the innermost one. This type of construction is known in the art and does not require to present, by itself, any novel and inventive and characteristics. However, it should be understood that new bushing constructions may be used in the bearing arrangement defined herein.

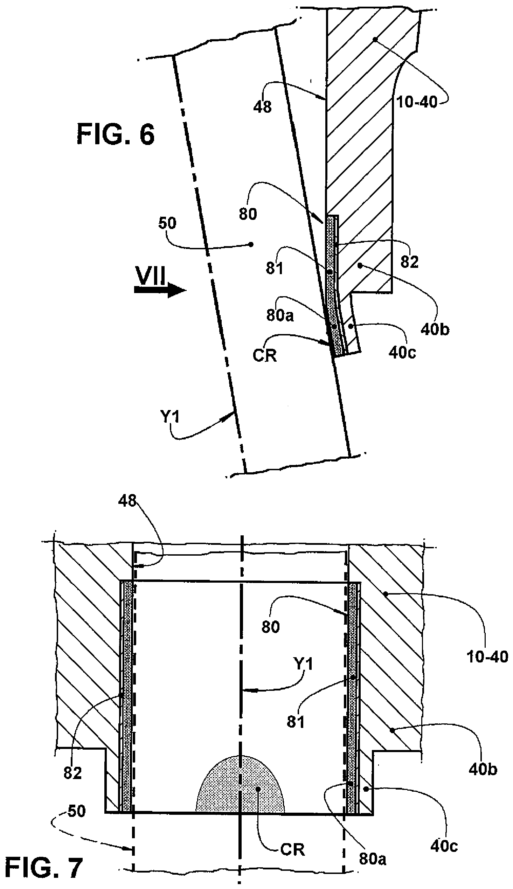

The bushing 80 may also be formed, for example, by an anti-friction tubular portion 81 (see figures 6 and 7) obtained in polymeric material and incorporated and retained, by any adequate method, in the interior of an external metallic tubular substrate 82.

Particularly, the metallic tubular substrate 82 may be defined by a steel strip, with an inner face incorporating a sintered bronze layer (not illustrated), the anti-friction tubular portion 81, of polymeric material, being affixed over the sintered bronze layer of the metallic tubular substrate 82. Said construction follows an already known pattern which allows producing bushings 80 with a reduced radial thickness and presenting a high regularity in terms of dimensional pattern and of parameters of structural resistance and friction coefficient.

The construction of the bushings 80 foreseen for the present bearing arrangement leads, inevitably, to bushings 80 presenting, not only a reduced radial thickness but also a reduced structural resistance against deformations, mainly deformations when submitted to radial forces.

Thus, the bushings 80 of the present arrangement are necessarily integrally mounted in the interior of the respective compressor components which support them, and they cannot project outwardly from said components defined at least by the second end portion 40b of the bearing hub 40 and also, optionally, by the first end portion 40a of the bearing hub 40 and, also optionally, by the larger eye 61 and by the smaller eye 62 of the connecting rod 60.

In the constructive embodiment illustrated in figures 2 and 3, a bushing 80 is radially and externally seated against the second end portion 40b of the bearing hub 40 which presents a structure dimensioned in a resistant way, usually with a reduced elastic deformation, upon being pressed by a confronting region of the crankshaft 50 presenting a coaxiality deviation of its axis Y1 in relation to the axis XI of the radial bearing 41.

Said figures illustrate the referred first embodiment further comprising a bushing 80 radially and externally seated against the first end portion 40a of the bearing hub 40 which also presents a structure dimensioned in a resistant way, usually with reduced elastic deformation, when pressed by a confronting region of the crankshaft 50 presenting a coaxiality deviation of its axis Yl in relation to the axis XI of the radial bearing 41.

In this first embodiment, the second end portion 40b of the bearing hub 40 totally surrounds the respective bushing 80 and presents a constant or variable thickness capable of providing to said second end portion 40b a structure dimensioned in a resistant way, usually with reduced elastic deformation, to the pressure which may be produced by a confronting region of the crankshaft 50 presenting a coaxiality deviation, in different operational conditions of the compressor.

Similarly, the first end portion 40a of the bearing hub 40 totally surrounds the respective bushing 80. However, in this case, considering the usual provision of an axial roller bearing 90 to support the weight of both the crankshaft 50 and the rotor 71, the crankcase 10 has its end region, from which projects the eccentric end portion 55 of the crankshaft 50, machined for the formation of a recess 11 around the radial bearing 41 and inside which is housed the axial roller bearing 90. The formation of the recess 11 creates, in the crankcase 10, a terminal portion 40d, of tubular shape, surrounding an end portion 80a of the respective bushing 80 and presenting a radial thickness, constant or variable, which is capable of providing to said terminal portion 40d, of the first end portion 40a, a structural resistance sufficient to support, with a certain complacency, the confronting end portion 80a of the respective bushing 80, when the latter is submitted to pressing forces which may be produced by a confronting region of the crankshaft 50 presenting coaxiality deviation, in different operational conditions of the compressor, allowing said end portion 80a of the bushing 80 to continue to define a respective radial bearing region of the crankshaft 50 under coaxiality deviation conditions.

With the arrangement suggested in the first embodiment of figures 2 and 3, each bushing 80 provided in the bearing hub 40 remains totally and radially seated and supported by a confronting portion of the crankcase 10 which is dimensioned to maintain the integrity of the form of the bushing 80, even when the latter is submitted to forces produced by coaxiality deviations of the crankshaft 50 in the beginning of the operation or during the normal operation of the compressor.

Figures 2 and 3 also illustrate the provision of a bushing 80 defining the bearing surface of the larger eye 61 and of the smaller eye 62 of the connecting rod 60.

According to this optional form of the invention, the larger eye 61 of the connecting rod 60 may present the end portion 61a thereof facing the bearing hub 40 and against which is radially and externally seated an end portion 80a of the respective bushing 80, said end portion 61a of the larger eye 61 presenting a structure dimensioned to be resistant, usually with reduced elastic deformation, to the pressing of the end portion 80a of the bushing 80 by a confronting region of the eccentric end portion 55 of the crankshaft 50 presenting a coaxiality deviation of the axis Y2 thereof in relation to the axis X2 of the larger eye 61.

In a similar manner, the smaller eye 62 of the connecting rod 60 may present the end portion 62a thereof facing the bearing hub 40 and against which is radially and externally seated an end portion 80a of the respective bushing 80, said end portion 62a of the smaller eye 62 presenting a structure dimensioned to be resistant, usually with reduced elastic deformation, to the pressing of the end portion 80a of the bushing 80 by a confronting region of the piston pin 63 presenting a coaxiality deviation of its axis in relation to the axis of the smaller eye 62.

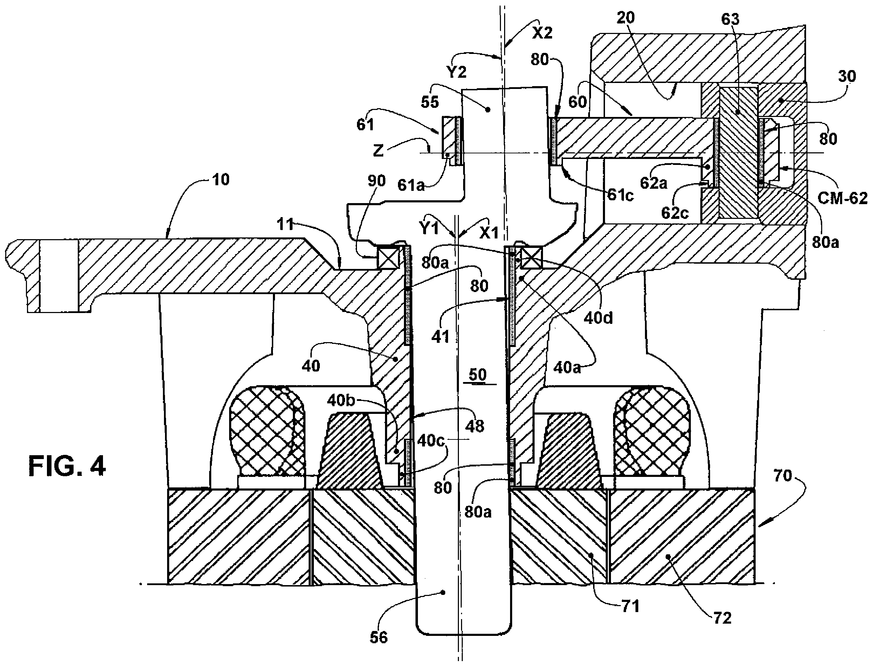

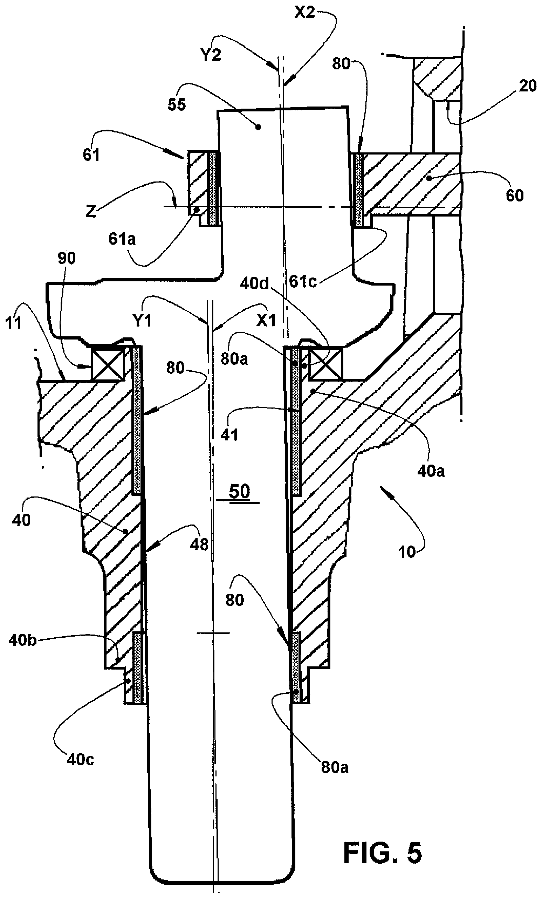

In the second constructive embodiment illustrated in figures 4 to 7, the second end portion 40b of the bearing hub 40 presents a terminal portion 40c against which is radially and externally seated an end portion 80a of the respective bushing 80, the terminal portion 40c presenting a reduced radial thickness so as to be elastically and radially deformed, outwardly, jointly with the end portion 80a of the bushing 80, when the latter is pressed by a confronting region of the crankshaft 50 presenting a coaxiality deviation of the axis Yl thereof in relation to the axis XI of the radial bearing 41.

Optionally, the first end portion 40a of the bearing hub 40 may present the terminal portion 40d, which projects axially outward from the crankcase 10 and against which is radially and externally seated the end portion 80a of the bushing 80, with a reduced radial thickness so as to be elastically and radially deformed, outwardly, jointly with the end portion 80a of the bushing 80, when the latter is pressed by a confronting region of the crankshaft 50 presenting a coaxiality deviation of the axis Yl thereof in relation to the axis XI of the radial bearing 41.

This second embodiment of the invention allows the end portion 80a of one or both of the bushings 80 provided in the bearing hub 40 to define, together with a confronting part of the crankshaft 50 and in the elastically deformed condition, a region of confronting surfaces CR, having dimensions in the axial and circumferential directions which are capable of maintaining, in said region, an oil film which separates, at least partially, the surfaces which form said region of confronting surfaces CR.

In a similar manner, the larger eye 61 of the connecting rod 60 may present the end portion 61a thereof, facing the bearing hub 40, in the form of a terminal portion 61c against which is radially and externally seated an end portion 80a of the bushing 80, said terminal portion 61c presenting a reduced radial thickness to be elastically and radially deformed, outwardly, jointly with the end portion 80a of the bushing 80, when the latter is pressed by a confronting region of the eccentric end portion 55 of the crankshaft 50presenting a coaxiality deviation of the axis Y2 thereof in relation to the axis X2 of the larger eye 61.

Optionally, the smaller eye 62 of the connecting rod 60 may present an end portion 62a facing the bearing hub 40 and incorporating a terminal portion 62c against which is radially and externally seated an end portion 80a of the bushing 80, said terminal portion 62c presenting reduced radial thickness to be elastically and radially deformed, outwardly, jointly with the end portion 80a of the bushing 80, when the latter is pressed by a confronting region of the piston pin 63 presenting a coaxiality deviation of its axis in relation to the axis of the smaller eye 62.

In the second embodiment, with the larger eye 61 and smaller eye 62 of the connecting rod 60 being provided with respective terminal portions 61c e 62c of reduced thickness, the end portion 80a of each of the two bushings 80 defines, together with a confronting part of one of the parts defined by the eccentric portion 55 of the crankshaft 50 and by the piston pin 63 and in the elastically deformed condition, a respective region of confronting surfaces CR, having dimensions in the axial and circumferential directions which are capable of maintaining, in said region, an oil film which separates, at least partially, the surfaces which form said region of confronting surfaces CR.

The region of confronting surfaces CR related to each bushing 80 of the bearing hub 40 or of the connecting rod 60, may take an approximately semi-elliptical form, with the end edge thereof matching the marginal edge of the adjacent end portions 80a of each bushing 80, as illustrated in figure 7.

The complacency regions in the end portions of the bearing hub 40 allow the radial deformation of the bushings 80 to produce a region of confronting surfaces CR having axial and circumferential dimensions enlarged, from a nominal condition of linear tangency between said parts to a condition in which the seating occurs by axial and circumferential extensions sufficient to prevent the interruption of the oil film.

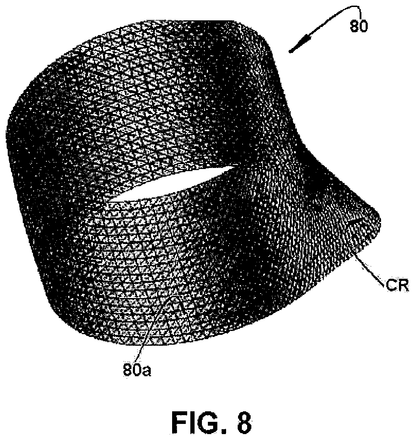

It should be understood that the region of confronting surfaces, illustrated in figures 7 and 8, between the crankshaft 50 and the bushing 80 in the second end portion 40b of the bearing hub 40 presents, according to the invention, the same configuration of the regions of confronting surfaces defined between the crankshaft 50 and the bushing 80 in the first end portion 40a of the bearing hub 40, and also of the regions of confronting surfaces defined between the bushings 80 of the connecting rod 60 and the eccentric end portion 55 of the crankshaft 50 or the piston pin 63.

Thus, the solution proposed in the second embodiment of the invention allow increasing the effective bearing area between said relatively moving parts of the crankshaft 50 and the eccentric portion 55 thereof, and also of the piston pin 63 in relation to the confronting and respective bushings 80, from a condition of tangential contact in ideal rigid parts according to a line in circumferential arc, to a condition in which said contact occurs according to a region of confronting surfaces CR, enlarged in the axial and circumferential directions.

The increase of the axial dimension of the regions of confronting surfaces CR provides an improved bearing for the crankshaft 50 during the inevitable misalignment conditions thereof, eliminating localized wear and efficiency losses due to rupture of the oil films, transforming metal-metal friction in a limit or mixed regime into friction in viscous regime in said regions of confronting surfaces CR of the tribological pairs.

The dimensions, in the axial and circumferential directions of said elastically deformable end portions, are determined by design characteristics of the compressor, size and operational conditions of the compressor and dimensional tolerances admitted during the manufacture and assembly process.

The mounting of the bushings 80 inside the bearing hub 40 may be carried out in different manners. As illustrated in figures 2 and 3, the bearing hub 40 may be internally provided with an internal and median circumferential projection 48, configured to define a stop for the bushings 80. However, it should be understood that the first and second end portion 40a, 40b of the bearing hub 40 may be defined by respective bushings 80 formed in a single tubular piece having a longitudinal extension compatible with the longitudinal extension of the bearing hub 40. In a constructive alternative also not illustrated, there may be provided two bushings, in separate pieces, but which would be mutually and axially confronting in the inner median portion of the bearing hub. In both cases, it is not provided the internal and median circumferential projection 48 illustrated in the construction of figures 2 and 3.

It should be further observed that the constructive alternatives described herein may be presented individually in particular constructions or also totally or partially combined to each other.

While the invention has been described herein with reference being made to the constructions illustrated in the attached drawings, it should be understood that the present arrangement may be applied to other possible compressor constructions, without departing from the constructive concept defined in the claims that accompany the present disclosure.

## Claims

1. A refrigeration compressor comprising: a crankcase (10) carrying a cylinder (20) and further comprising a bearing hub (40) defining a radial bearing (41); a crankshaft (50) mounted in the radial bearing (41) and having an eccentric end portion (55) and a free end portion (56) which project outwardly from a first and from a second end portion (40a, 40b), respectively, of the bearing hub (40); a piston (30) lodged in the cylinder (20); a connecting rod (60) coupling the eccentric end portion (55) of the crankshaft (50) to the piston (30), wherein at least the second end portion (40b), among the first and the second end portions (40a, 40b) of the bearing hub (40), comprises a respective bushing (80), which is affixed in the interior of the bearing hub (40), wherein the second end portion (40b) of the bearing hub (40) presents a terminal portion (40c) against which is radially and externally seated an end portion (80a) of the bushing (80), **characterized in that** said terminal portion (40c) presents a reduced radial thickness so as to be elastically and radially deformed, outwardly, jointly with the end portion (80a) of the bushing (80), when the latter is pressed by a confronting region of the crankshaft (50) presenting a coaxiality deviation of its axis (Yl) in relation to the axis (XI) of the radial bearing (41).

2. The compressor according to claim 1, **characterized in that** the bushing (80) is radially and externally seated against the second end portion (40b), of the bearing hub (40) which presents a structure resistant to the pressing of a confronting region of the crankshaft (50) presenting a coaxiality deviation of its axis (Yl) in relation to the axis (XI) of the radial bearing (41).

3. The compressor according to claim 2, **characterized in that** the bushing (80) is radially and externally seated against the first end portion (40a), of the bearing hub (40), which presents a structure resistant to the pressing of a confronting region of the crankshaft (50) presenting a coaxiality deviation of its axis (Yl) in relation to the axis (XI) of the radial bearing (41).

4. The compressor according to claim 1, **characterized in that** the first end portion (40a) of the bearing hub (40) incorporates a terminal portion (40d) which projects axially outwardly from the crankcase (10) and against which is radially and externally seated an end portion (80a) of the bushing (80), said terminal portion (40d) presenting a reduced radial thickness to be elastically and radially deformed, outwardly, jointly with the end portion (80a) of the bushing (80), when the latter is pressed by a confronting region of the crankshaft (50) presenting a coaxiality deviation of the axis (Yl) thereof in relation to the axis (XI) of the radial bearing (41).

5. The compressor according to claim 4, **characterized in that** the end portion (80a) of the bushing (80) defines, together with a confronting part of the crankshaft (50) and in the elastically deformed condition, a region of confronting surfaces (CR) having dimensions in the axial and circumferential directions capable of maintaining, in said region, an oil film that separates, at least partially, the surfaces which form said region of confronting surfaces (CR).

6. The compressor according to any one of claims 1 to 5, in which the connecting rod (60) presents a larger eye (61) mounted around the eccentric end portion (55) of the crankshaft (50), the arrangement being **characterized in that** the larger eye (61) of the connecting rod (60) affixes, totally contained therein, a bushing (80) defining the bearing surface of the larger eye (61) in relation to the eccentric end portion (55) of the crankshaft (50).

7. The compressor according to claim 6, **characterized in that** the larger eye (61) of the connecting rod (60) presents an end portion (61a) facing the bearing hub (40) and against which is radially and externally seated an end portion (80a) of the bushing (80), said end portion (61a) of the larger eye (61) presenting a structure resistant to the pressing of the end portion (80a) of the bushing (80) by a confronting region of the eccentric end portion (55) of the crankshaft (50) presenting a coaxiality deviation of the axis (Y2) thereof in relation to the axis (X2) of the larger eye (61) .

8. The compressor according to claim 8, **characterized in that** the larger eye (61) of the connecting rod (60) presents an end portion (61a) facing the bearing hub (40) and incorporating a terminal portion (61c) against which is radially and externally seated an end portion (80a) of the bushing (80), said terminal portion (61c) presenting a reduced radial thickness to be elastically and radially deformed, outwardly, jointly with the end portion (80a) of the bushing (80), when the latter is pressed by a confronting region of the eccentric end portion (55) of the crankshaft (50) presenting a coaxiality deviation of the axis (Y2) thereof in relation to the axis (X2) of the larger eye (61).

9. The compressor according to any one of claims 1 to 8, in which the connecting rod (60) presents a smaller eye (62) mounted around a piston pin (63), the arrangement being **characterized in that** the smaller eye (62) of the connecting rod (60) affixes, totally contained therein, a bushing (80) defining the bearing surface of the smaller eye (62) in relation to the piston pin (63).

10. The compressor according to claim 9, **characterized in that** the smaller eye (62) of the connecting rod (60) presents an end portion (62a) facing the bearing hub (40) and against which is radially and externally seated an end portion (80a) of the bushing (80), said end portion (62a) of the smaller eye (62) presenting a structure resistant to the pressing of the end portion (80a) of the bushing (80), when the latter is pressed by a confronting region of the piston pin (63), presenting a coaxiality deviation of its axis in relation to the axis of the smaller eye (62).

11. The compressor according to claim 9, **characterized in that** the smaller eye (62) of the connecting rod (60) presents an end portion (62a) facing the bearing hub (40) and incorporating a terminal portion (62c) against which is radially and externally seated an end portion (80a) of the bushing (80), said terminal portion (62c) presenting a reduced radial thickness so as to be elastically and radially deformed, outwardly, jointly with the end portion (80a) of the bushing (80), when the latter is pressed by a confronting region of the piston pin (63) presenting a coaxiality deviation of its axis in relation to the axis of the smaller eye (62).

12. The compressor according to any one of claims 8 or 11, **characterized in that** the end portion (80a) of the bushing (80) defines, together with a confronting part of one of the parts defined by the eccentric portion (55) of the crankshaft (50) and by the piston pin (63) and in the elastically deformed condition, a region of confronting surfaces (CR), having dimensions, in the axial and circumferential directions which are capable of maintaining, in said region, an oil film which, at least partially, separates the surfaces that form said region of confronting surfaces (CR).

13. The compressor, according to any one of claims 5 or 12, **characterized in that** the region of confronting surfaces (CR) takes an approximately semi-elliptical form, with the end edge thereof matching the marginal edge of the adjacent end portions (80a) of each bushing (80).

14. The compressor according to any one of claims 1 to 13, **characterized in that** the bushing (80) is formed by a combination of layers of metal and polymer, in which the latter is the innermost.

15. The compressor according to any one of claims 1 to 13, **characterized in that** the bushing (80) is formed by an antifriction tubular portion (81) obtained in polymeric material and incorporated and retained inside an external metallic tubular substrate (82).

16. The compressor according to claim 15, **characterized in that** the metallic tubular substrate (82) is defined by a steel strip with an inner face incorporating a sintered bronze layer, the antifriction tubular portion (81) of polymeric material being affixed over the sintered bronze layer of the metallic tubular substrate (82).

## Patentansprüche

1. Kühlkompressor, der enthält: ein Kurbelgehäuse (10), das einen Zylinder (20) trägt und ferner eine Lagernabe (40) enthält, die ein Radiallager (41) definiert; eine Kurbelwelle (50), die in dem Radiallager (41) montiert ist und einen exzentrischen Endteil (55) und einen freien Endteil (56) hat, die von einem ersten bzw. einem zweiten Endteil (40a, 40b) der Lagernabe (40) auswärts vorstehen; einen Kolben (30), der in dem Zylinder (20) steckt; einen Verbindungsstange (60), die den exzentrischen Endteil (55) der Kurbelwelle (50) an den Kolben (30) koppelt, wobei wenigstens der zweite Endteil (40b) unter den ersten und zweiten Endteilen (40a, 40b) der Lagernabe (40) eine entsprechende Buchse (80) enthält, die im Inneren der Lagernabe (40) befestigt ist, wobei der zweite Endteil (40b) der Lagernabe (40) einen Anschlussteil (40c) präsentiert, gegen den radial und extern ein Endteil (80a) der Buchse (80) sitzt, **dadurch gekennzeichnet, dass** der Anschlussteil (40c) eine reduzierte radiale Dicke präsentiert, um elastisch und radial auswärts verbunden mit dem Endteil (80a) der Buchse (80) deformiert zu werden, wenn die letztere durch einen gegenüberstehenden Bereich der Kurbelwelle (50) gedrückt wird, der eine koaxiale Abweichung ihrer Achse (Y1) in Bezug auf die Achse (XI) des Radiallagers (41) präsentiert.

2. Kompressor nach Anspruch 1, **dadurch gekennzeichnet, dass** die Buchse (80) radial und extern gegen den zweiten Endteil (40b) der Lagernabe (40) sitzt, der eine Struktur präsentiert, die dem Drücken eines gegenüberstehenden Bereichs der Kurbelwelle (50) widersteht, der eine koaxiale Abweichung ihrer Achse (Y1) in Bezug auf die Achse (XI) des Radiallagers (41) präsentiert.

3. Kompressor nach Anspruch 2, **dadurch gekennzeichnet, dass** die Buchse (80) radial und extern gegen den ersten Endteil (40a) der Lagernabe (40) sitzt, der eine Struktur präsentiert, die dem Drücken eines gegenüberstehenden Bereichs der Kurbelwelle (50) widersteht, der eine koaxiale Abweichung ihrer Achse (Y1) in Bezug auf die Achse (XI) des Radiallagers (41) präsentiert.

4. Kompressor nach Anspruch 1, **dadurch gekennzeichnet, dass** der erste Endteil (40a) der Lagernabe (40) einen Anschlussteil (40d) beinhaltet, das von dem Kurbelgehäuse (10) axial auswärts vorsteht und gegen das ein Endteil (80a) der Buchse (80) radial und extern sitzt, wobei der Anschlussteil (40d) eine reduzierte radiale Dicke präsentiert, um elastisch und radial deformiert zu werden, wenn die letztere durch einen gegenüberstehenden Bereich der Kurbelwelle (50) gedrückt wird, der eine koaxiale Abweichung der Achse (Y1) davon in Bezug auf die Achse (XI) des Radiallagers (41) präsentiert.

5. Kompressor nach Anspruch 4, **dadurch gekennzeichnet, dass** der Endteil (80a) der Buchse (80) zusammen mit einem gegenüberstehenden Teil der Kurbelwelle (50) und in dem elastisch deformierten Zustand einen Bereich von gegenüberstehenden Oberflächen (CR) definiert, die in den axialen und Umfangsrichtungen Dimensionen haben, die geeignet sind, in der Region einen Ölfilm aufrecht zu erhalten, der wenigstens teilweise die Oberflächen trennt, die den Bereich von gegenüberstehenden Oberflächen (CR) bilden.

6. Kompressor nach einem der Ansprüche 1 bis 5, wobei die Verbindungsstange (60) ein größeres Auge (61) präsentiert, das um den exzentrischen Endteil (55) der Kurbelwelle (50) montiert ist, wobei die Anordnung **dadurch gekennzeichnet ist, dass** das größere Auge (61) der Verbindungsstange (60) vollständig darin enthalten eine Buchse (80) befestigt, die die Lageroberfläche des größeren Auges (61) in Bezug auf den exzentrischen Endteil (55) der Kurbelwelle (50) definiert.

7. Kompressor nach Anspruch 6, **dadurch gekennzeichnet, dass** das größere Auge (61) der Verbindungsstange (60) einen Endteil (61a) präsentiert, der der Lagernabe (40) zugewandt ist und der radial und extern an dem Endteil (80a) der Buchse (80) sitzt, wobei der Endteil (61a) des größeren Auges (61) eine Struktur präsentiert, die dem Drücken des Endteils (80a) der Buchse (80) durch einen gegenüberstehenden Bereich des exzentrischen Endteils (55) der Kurbelwelle (50) widersteht, der eine koaxiale Abweichung der Achse (Y2) davon in Bezug auf die Achse (X2) des größeren Auges (61) präsentiert.

8. Kompressor nach Anspruch 6, **dadurch gekennzeichnet, dass** das größere Auge (61) der Verbindungsstange (60) einen Endteil (61a) präsentiert, der der Lagernabe (40) zugewandt ist und einen Anschlussteil (61c) beinhaltet, gegen den radial und extern einen Endteil (80a) der Buchse (80) sitzt, wobei der Anschlussteil (61c) eine reduzierte radiale Dicke präsentiert, um elastisch und radial auswärts deformiert zu werden in Verbindung mit dem Endteil (80a) der Buchse (80), wenn die letztere durch einen gegenüberstehenden Bereich des exzentrischen Endteils (55) der Kurbelwelle (50) gedrückt wird, der eine koaxiale Abweichung der Achse (Y2) davon in Bezug auf die Achse (X2) des größeren Auges (61) präsentiert.

9. Kompressor nach einem der Ansprüche 1 bis 8, wobei die Verbindungsstange (60) ein kleineres Auge (62) präsentiert, das um einen Kolbenstift (63) montiert ist, wobei die Anordnung **dadurch gekennzeichnet ist, dass** das kleinere Auge (62) der Verbindungsstange (60) vollständig darin enthalten eine Buchse (80) befestigt, die die Lageroberfläche des kleineren Auges (62) in Bezug auf den Kolbenstift (63) definiert.

10. Kompressor nach Anspruch 9, **dadurch gekennzeichnet, dass** das kleinere Auge (62) der Verbindungsstange (60) einen Endteil (62a) präsentiert, der der Lagernabe (40) zugewandt ist und gegen den radial und extern ein Endteil (80a) der Buchse (80) sitzt, wobei der Endteil (62a) des kleineren Auges (62) eine Struktur präsentiert, die dem Drücken des Endteils (80a) der Buchse (80) widersteht, wenn der letztere durch einen gegenüberstehenden Bereich des Kolbenstiftes (63) gedrückt wird, der eine koaxiale Abweichung seiner Achse davon in Bezug auf die Achse des kleineren Auges (62) präsentiert.

11. Kompressor nach Anspruch 9, **dadurch gekennzeichnet, dass** das kleinere Auge (62) der Verbindungsstange (60) einen Endteil (62a) präsentiert, der der Lagernabe (40) zugewandt ist und einen Anschlussteil (62c) beinhaltet, gegen den radial und extern einen Endteil (80a) der Buchse (80) sitzt, wobei der Anschlussteil (62c) eine reduzierte radiale Dicke präsentiert, um elastisch und radial auswärts deformiert zu werden in Verbindung mit dem Endteil (80a) der Buchse (80), wenn die letztere durch einen gegenüberstehenden Bereich des Kolbenstiftes (63) gedrückt wird, der eine koaxiale Abweichung seiner Achse in Bezug auf die Achse des kleineren Auges (62) präsentiert.

12. Kompressor nach Anspruch 8 oder 11, **dadurch gekennzeichnet, dass** der Endteil (80a) der Buchse (80) zusammen mit einem gegenüberstehendenden Teil der Teile, die durch den exzentrischen Teil (55) der Kurbelwelle (50) und durch den Kolbenstift (63) und in dem elastisch deformierten Zustand einen Bereich gegenüberstehender Oberflächen (CR) definiert, die in den axialen und Umfangsrichtungen Dimensionen haben, die geeignet sind, in der Region einen Ölfilm aufrecht zu erhalten, der wenigstens teilweise die Oberflächen trennt, die den Bereich von gegenüberstehenden Oberflächen (CR) bilden.

13. Kompressor nach einem der Ansprüche 5 oder 12, **dadurch gekennzeichnet, dass** der Bereich von gegenüberstehenden Oberflächen (CR) eine ungefähr halbelliptische Form einnimmt, mit dem Endrand davon passend zu dem marginalen Rand der benachbarten Endteile (80a) jeder Buchse (80).

14. Kompressor nach einem der Ansprüche 1 bis 13, **dadurch gekennzeichnet, dass** die Buchse (80) durch eine Kombination von Schichten aus Metall und einem Polymer gebildet ist, wobei das letztere die innerste ist.

15. Kompressor nach einem der Ansprüche 1 bis 13, **dadurch gekennzeichnet, dass** die Buchse (80) durch einen reibungsverhindernden rohrartigen Teil (81) gebildet ist, der aus polymerem Material erhalten und beinhaltet und gehalten wird innerhalb einem externen metallischen rohrartigen Substrat (82) .

16. Kompressor nach Anspruch 15, **dadurch gekennzeichnet, dass** das metallische rohrartige Substrat (82) durch einen Stahlstreifen mit einer Innenfläche definiert ist, die eine gesinterte Bronzeschicht beinhaltet, wobei der reibungsverhindernde rohrartige Teil (81) aus polymerem Material über der gesinterten Bronzeschicht des metallischen rohrartigen Substrats (82) befestigt ist.

## Revendications

1. Un compresseur de réfrigération comprenant : un carter (10) comportant un cylindre (20) et en outre un moyeu de palier (40) définissant un palier radial (41) ; un vilebrequin (50) monté dans le palier radial (41) et ayant une partie d'extrémité excentrique (55) et une partie d'extrémité libre (56) qui font saillies vers l'extérieur à partir respectivement d'une première et d'une seconde parties d'extrémité (40a, 40b) du moyeu de palier (40) ; un piston (30) logé dans le cylindre (20) ; une bielle de connexion (60) couplant la partie d'extrémité excentrique (55) du vilebrequin (50) avec le piston (30), dans lequel au moins la seconde partie d'extrémité (40b), parmi les première et seconde parties d'extrémité (40a, 40b) du moyeu de palier (40), comprend une douille respective (80), qui est fixée à l'intérieur du moyeu de palier (40), dans lequel la seconde partie d'extrémité (40b) du moyeu de palier (40) présente une partie terminale (40c) contre laquelle est positionnée radialement et extérieurement une partie d'extrémité (80a) de la douille (80), **caractérisé en ce que** ladite partie terminale (40c) présente une épaisseur radiale réduite de façon à être déformée élastiquement et radialement, vers l'extérieur, conjointement avec la partie d'extrémité (80a) de la douille (80), quand cette dernière est soumise à une pression par une région du vilebrequin (50) lui faisant face et présentant un défaut de coaxialité de son axe (Y1) par rapport à l'axe géométrique (X1) du palier radial (41).

2. Le compresseur selon la revendication 1, **caractérisé en ce que** la douille (80) est positionnée radialement et extérieurement contre la seconde partie d'extrémité (40b) du moyeu de palier (40), qui présente une structure résistant à la pression d'une région du vilebrequin (50) lui faisant face présentant un défaut de coaxialité de son axe (Y1) par rapport à l'axe (X1) du palier radial (41).

3. Le compresseur selon la revendication 2, **caractérisé en ce que** la douille (80) est positionnée radialement et extérieurement contre la première partie d'extrémité (40a) du moyeu de palier (40), qui présente une structure résistant à la pression d'une région du vilebrequin (50) lui faisant face présentant un défaut de coaxiliaté de son axe (Y1) par rapport à l'axe (X1) du palier radial (41).

4. Le compresseur selon la revendication 1, **caractérisé en ce que** la première partie d'extrémité (40a) du moyeu de palier (40) comprend une partie terminale (40d) qui fait saillie axialement vers l'extérieur à partir du carter (10) et contre laquelle est positionnée radialement et extérieurement une partie d'extrémité (80a) de la douille (80), ladite partie terminale (40d) présentant une épaisseur radiale réduite pour être déformée élastiquement et radialement, vers l'extérieur, conjointement avec la partie d'extrémité (80a) de la douille (80), lorsque cette dernière est soumise à une pression par une région du vilebrequin (50) lui faisant face présentant un défaut de coaxialité de son axe (Y1) par rapport à l'axe (X1) du palier radial (41).

5. Le compresseur selon la revendication 4, **caractérisé en ce que** la partie d'extrémité (80a) de la douille (80) définit, conjointement avec une partie du vilebrequin (50) faisant face et dans l'état de déformation élastique, une région de surfaces en regard (CR) ayant des dimensions dans les directions axiale et circonférentielle aptes à retenir, dans ladite région, un film d'huile qui sépare, au moins partiellement, les surfaces qui forment ladite région de surfaces en regard (CR).

6. Le compresseur selon l'une quelconque des revendications 1 à 5, dans lequel la bielle de connexion (60) présente un œil plus grand (61) monté autour de la partie d'extrémité excentrique (55) du vilebrequin (50), l'agencement étant **caractérisé en ce que** l'œil plus grand (61) de la bielle de connexion (60) fixe, totalement contenue dedans, une douille (80) définissant la surface d'appui de l'œil plus grand (61) par rapport à la partie d'extrémité excentrique (55) du vilebrequin (50).

7. Le compresseur selon la revendication 6, **caractérisé en ce que** l'œil plus grand (61) de la bielle de connexion (60) présente une partie d'extrémité (61a) tournée vers le moyeu de palier (40) et contre laquelle est positionnée radialement et extérieurement une partie d'extrémité (80a) de la douille (80), ladite partie d'extrémité (61a) de l'œil plus grand (61) présentant une structure résistant à la pression de la partie d'extrémité (80a) de la douille (80) par une région en regard de la partie d'extrémité excentrique (55) du vilebrequin (50) présentant un défaut de coaxialité de son axe (Y2) par rapport à l'axe (X2) de l'œil le plus grand (61).

8. Le compresseur selon la revendication 7, **caractérisé en ce que** l'œil plus grand (61) de la bielle de connexion (60) présente une partie d'extrémité (61a) tournée vers le moyeu de palier (40) et incorporant une partie terminale (61c) contre laquelle est radialement et extérieurement positionnée une partie d'extrémité (80a) de la douille (80), ladite partie terminale (61c) présentant une épaisseur radiale réduite pour être déformée élastiquement et radialement, vers l'extérieur, conjointement avec la partie d'extrémité (80a) de la douille (80), lorsque cette dernière est soumise à une pression d'une région, lui faisant face, de la partie d'extrémité excentrique (55) du vilebrequin (50) présentant un défaut de coaxialité de son axe (Y2) par rapport à l'axe (X2) de l'œil le plus grand (61).

9. Le compresseur selon l'une quelconque des revendications 1 à 8, dans lequel la bielle de connexion (60) présente un œil plus petit (62) monté autour d'un axe de piston (63), l'arrangement étant **caractérisé en ce que** l'œil plus petit (62) de la bielle de connexion (60) fixe, totalement contenue dedans, une douille (80) définissant la surface d'appui de l'œil plus petit (62) par rapport à l'axe de piston (63).

10. Le compresseur selon la revendication 9, **caractérisé en ce que** de l'œil plus petit (62) de la bielle de connexion (60) présente une partie d'extrémité (62a) tournée vers le moyeu de palier (40) et contre laquelle est radialement et extérieurement positionnée une partie d'extrémité (80a) de la douille (80), ladite partie d'extrémité (62a) de l'œil plus petit (62) présentant une structure résistant à la pression de la partie d'extrémité (80a) de la douille (80), lorsque cette dernière est soumise à une pression d'une région, lui faisant face, de l'axe de piston (63), présentant un défaut de coaxialité de son axe par rapport à l'axe de l'œil plus petit (62).

11. Le compresseur selon la revendication 9, **caractérisé en ce que** de l'œil petit œil (62) de la bielle de connexion (60) présente une partie d'extrémité (62a) faisant face au moyeu de palier (40) et comprenant une partie terminale (62c) contre laquelle est positionnée radialement et extérieurement une partie d'extrémité (80a) de la douille (80), ladite partie terminale (62c) présentant une épaisseur radiale réduite de manière à être déformée élastiquement et radialement, vers l'extérieur, conjointement avec la partie d'extrémité (80a) de la douille (80), lorsque cette dernière est soumise à une pression d'une région ; lui faisant face, de l'axe de piston (63) présentant un défaut de coaxialité de son axe par rapport à l'axe de l'œil plus petit (62).

12. Le compresseur selon l'une quelconque des revendications 8 ou 11, **caractérisé en ce que** la partie d'extrémité (80a) de la douille (80) définit, conjointement avec une partie, lui faisant face, de l'une des parties définies par la partie excentrique (55) du vilebrequin (50) et par l'axe de piston (63) et en l'état de déformation élastique, une région de surfaces en regard (CR), ayant des dimensions, dans les directions axiale et circonférentielle, qui sont aptes à retenir, dans ladite région, un film d'huile qui sépare au moins partiellement les surfaces qui forment ladite région de surfaces en regard (CR).

13. Le compresseur selon l'une quelconque des revendications 5 ou 12, **caractérisé en ce que** la région de surfaces en regard (CR) prend une forme approximativement semi-elliptique, avec le bord d'extrémité correspondant au bord marginal des parties d'extrémité adjacentes (80a) de chaque douille (80).

14. Le compresseur selon l'une quelconque des revendications 1 à 13, **caractérisé en ce que** la douille (80) est formée par une combinaison de couches de métal et de polymère, dans laquelle cette dernière est la plus à l'intérieur.

15. Le compresseur selon l'une quelconque des revendications 1 à 13, **caractérisé en ce que** la douille (80) est formée par une partie tubulaire antifriction (81) réalisée en un matériau polymère et incorporée et retenue à l'intérieur d'un substrat tubulaire métallique extérieur (82).

16. Le compresseur selon la revendication 15, **caractérisé en ce que** le substrat tubulaire métallique (82) est défini par une bande d'acier avec une face intérieure incorporant une couche de bronze fritté, la partie tubulaire antifriction (81) étant en un matériau polymère fixé sur la couche de bronze fritté du substrat tubulaire métallique (82).
